# EUROPEAN PATENT APPLICATION

(11) **EP 4 498 218 A1**
(43) Date of publication of application: **29.01.2025**
(21) Application number: 24737665.0
(22) Date of filing: 12.06.2024
(51) Int. Cl.: G06F 3/04842, G06F 3/04845, G06F 3/0486, G06F 3/041, G06F 3/0488

(54) **ELECTRONIC DEVICE AND METHOD FOR INSERTING DATA INTO EXECUTION SCREEN OF APPLICATION, AND RECORDING MEDIUM**

(30) Priority: 13.06.2023 KR 20230075695; 20.07.2023 KR 20230094929
(71) Applicant: Samsung Electronics Co., Ltd, Suwon-si, Gyeonggi-do 16677 (KR)
(72) Inventor: SO, Sanghun, Suwon-si, Gyeonggi-do 16677 (KR); KIM, Hyunho, Suwon-si, Gyeonggi-do 16677 (KR); KIM, Philjun, Suwon-si, Gyeonggi-do 16677 (KR); PARK, Youngha, Suwon-si, Gyeonggi-do 16677 (KR); JEONG, Hyesoon, Suwon-si, Gyeonggi-do 16677 (KR)
(74) Representative: Nederlandsch Octrooibureau
(86) International application number: PCT/KR2024/008072
(87) International publication number: WO 2024/258185

(57) **Abstract**

An electronic device and method of inserting data into an execution screen of an application are provided. A method of inputting an image into the execution screen of the application in the electronic device includes identifying a first image input method corresponding to at least one user input for inputting the image into the execution screen of the application, identifying whether the first image input method is supported by the application, identifying a second image input method supported by the application in response to the first image input method not supported by the application, acquiring a code of a framework for inputting the image into the execution screen of the application by the second image input method, and providing the acquired code of the framework to the application.

## Description

### [Technical Field]

The disclosure relates to an electronic device and method of inserting data into an execution screen of an application, and a recording medium.

### [Background Art]

With the growth of multimedia technologies and network technologies, electronic devices can use various data through various applications, and various input methods for inputting data to an application are provided.

However, data input methods supported by an application are not the same for each application. And, when a user input is received using a data input method not supported by the application among the data input methods, there is a problem that the user input cannot be processed by the application. Also, there is a problem that an electronic device is difficult to modify a code of the application in order for the application to process the data input method not supported by the application.

Accordingly, there is a need for technologies in which, even when a user input is received using the data input method not supported by the application, a data input operation can be performed through other data input methods supported by the application, without modifying the code of the application.

The above information can be provided as a related art intended to aid the understanding of the disclosure. No claim or determination is made as to whether any of the foregoing can be applied as a prior art related to the disclosure.

### [Disclosure of Invention]

### [Solution to Problem]

As a technical solution for addressing the above-described technical problem, an embodiment of the disclosure may provide a method of inputting an image into an execution screen of an application in an electronic device. The method may include receiving at least one user input for inputting an image into the execution screen of the application, identifying a first image input method corresponding to the at least one user input, identifying the image and an input location, on the execution screen, of the image, based on the at least one user input, identifying whether the first image input method is supported by the application, identifying a second image input method supported by the application in response to the first image input method not supported by the application, generating a code of a framework for inputting the image into the execution screen of the application by the second image input method, based on the image and the input location, and providing the generated code of the framework to the application.

Also, an embodiment of the disclosure may provide an electronic device of inputting an image into an execution screen of an application. The electronic device may include a display, a memory configured to store instructions, and at least one processor operatively connected to the display and the memory and executing the instructions. The at least one processor may be configured to, by executing the instructions, receive at least one user input for inputting the image into the execution screen of the application, identify a first image input method corresponding to the at least one user input, identify the image and an input location, on the execution screen, of the image, based on the at least one user input, identify whether the first image input method is supported by the application, identify a second image input method supported by the application in response to the first image input method not being supported by the application, acquire a code of a framework for inputting the image into the execution screen of the application by the second image input method, based on the image and the input location, and provide the acquired code of the framework to the application.

Also, an embodiment of the disclosure may provide a computer-readable recording medium recording a program for executing a method of inputting an image into an execution screen of an application. The method may include receiving at least one user input for inputting the image into the execution screen of the application, identifying a first image input method corresponding to the at least one user input, identifying the image and an input location, on the execution screen, of the image, based on the at least one user input, identifying whether the first image input method is supported by the application, identifying a second image input method supported by the application in response to the first image input method not being supported by the application, acquiring a code of a framework for inputting the image into the execution screen of the application by the second image input method, based on the image and the input location, and providing the acquired code of the framework to the application.

Also, an embodiment of the disclosure may provide a method of inputting an image into an execution screen of an application in an electronic device. The method may include receiving at least one user input for inputting an image into the execution screen of the application, identifying a first image input method corresponding to the at least one user input, identifying whether the first image input method is supported by the application, identifying a second image input method supported by the application in response to the first image input method not supported by the application, inputting the image to the application through the second image input method using code of a framework for inputting the image into the execution screen of the application through the second image input method.

### [Brief Description of Drawings]

FIG. 1 is a diagram illustrating an overview of inputting an image into an execution screen of an application in an electronic device according to an embodiment of the disclosure.
FIG. 2 is a flowchart of a method of inputting an image into an execution screen of an application, according to an embodiment of the disclosure.
FIG. 3 is a flowchart of a method of inputting an image to an application according to a user input of inputting the image through a keyboard in an electronic device according to an embodiment of the disclosure.
FIG. 4A is a diagram illustrating an example of an execution screen of an application, according to an embodiment of the disclosure.
FIG. 4B is a diagram illustrating an example of displaying an execution screen of an application and an execution screen of a keyboard application, according to an embodiment of the disclosure.
FIG. 4C is a diagram illustrating an example of displaying an image list within an execution screen of a keyboard application and displaying an image selected from the image list within an input field, according to an embodiment of the disclosure.
FIG. 4D is a diagram illustrating an example of inputting an image into an execution screen of an application, according to an embodiment of the disclosure.
FIG. 5 is a flowchart of a method of inputting an image to an application according to a user input of dragging and dropping the image in an electronic device according to an embodiment of the disclosure.
FIG. 6 is a diagram illustrating an example of inputting an image to an application when receiving a drag-and-drop user input, according to an embodiment of the disclosure.
FIG. 7 is a flowchart of a method of inputting an image to an application according to a user input of pasting the image in an electronic device according to an embodiment of the disclosure.
FIG. 8 is a diagram illustrating an example of inputting an image to an application when receiving a user input for image paste, according to an embodiment of the disclosure.
FIG. 9 is a block diagram of an electronic device in a network environment, according to various embodiments.
FIG. 10 is a diagram illustrating a software stack of an electronic device according to an embodiment of the disclosure.

### [Mode for Invention]

Embodiments of the disclosure will be described below in detail with reference to the attached drawings so that those skilled in the art to which the disclosure pertains may easily embody the disclosure. However, the disclosure may be implemented in many different forms and is not limited to the embodiments described herein. In the drawings, portions unrelated to the description are omitted so as to clearly explain the disclosure, and similar portions are given similar reference numerals throughout the specification.

Terms used in the disclosure are described by currently used general terms in consideration of functions mentioned in the disclosure, but may mean various other terms depending on the intention or precedents of those skilled in the art, the emergence of new technologies, etc. Accordingly, the terms used in the disclosure should not be interpreted only by the names of the terms, but should be interpreted based on the meaning of the terms and the overall content of the disclosure.

Also, terms such as first, second, etc. may be used to describe various components, but the components should not be limited by these terms. These terms are used for the purpose of distinguishing one component from another component.

Throughout the specification, when a certain part is said to be "connected" to another part, this includes not only "directly connected", but also "electrically connected" with another device located therebetween. Also, when a certain part is said to "include" a certain component, this means further including other components rather than excluding other components, unless specifically dictated otherwise.

Phrases such as "in an embodiment" appearing in various places in the disclosure do not necessarily all refer to the same embodiment.

An embodiment of the disclosure may be represented by functional block constructions and various processing steps. Some or all of these functional blocks may be implemented as various numbers of hardware and/or software constructions that execute specific functions. For example, the functional blocks of the disclosure may be implemented by one or more microprocessors, or may be implemented by circuit constructions for certain functions. Also, for example, the functional blocks of the disclosure may be implemented in various programming or scripting languages. The functional blocks may be implemented as algorithms executed by one or more processors. Also, the disclosure may employ conventional technologies for electronic environment setup, signal processing, and/or data processing. Terms such as "mechanism," "element," "means", and "construction" may be used widely, and are not limited to mechanical and physical components.

Also, connection lines or connection members between components illustrated in the drawings merely exemplify functional connections and/or physical or circuit connections. In an actual device, connections between components may be represented by various replaceable or additional functional connections, physical connections, or circuit connections.

The disclosure will be described below in detail with reference to the accompanying drawings.

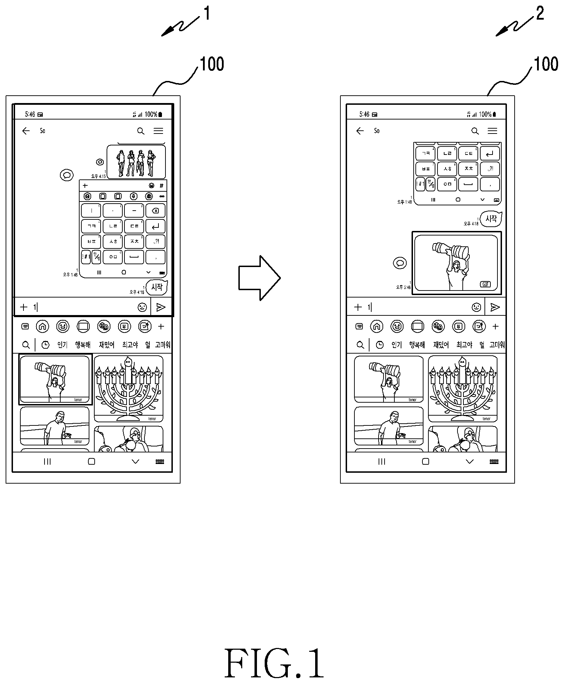

FIG. 1 is a diagram illustrating an overview of inputting an image into an execution screen of an application in an electronic device according to an embodiment of the disclosure.

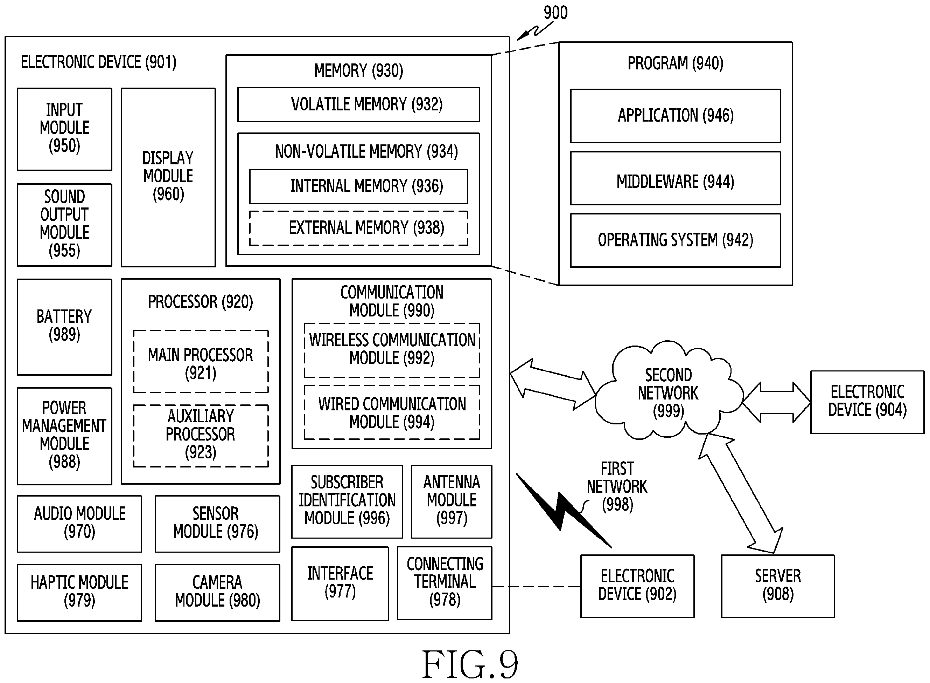

Referring to identification number 1 and identification number 2 of FIG. 1, when a user input for inputting an image into an execution screen of an application (e.g., application 946 of FIG. 9) is received and an image input method corresponding to the user input is not supported by the application, the electronic device 100 of an embodiment may input the image into the execution screen of the application by another image input method.

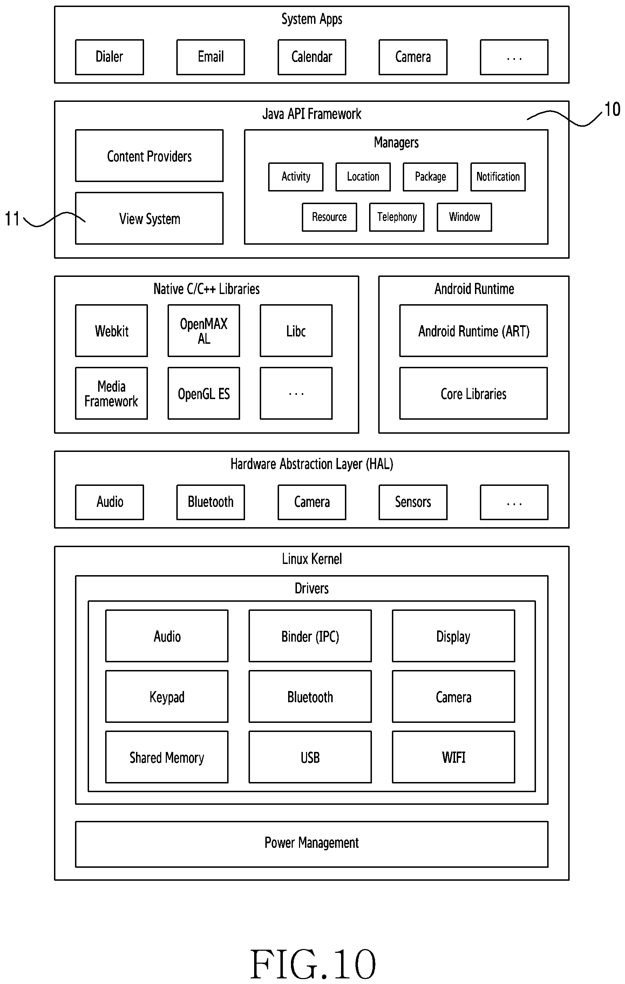

For example, referring to identification number 1, the electronic device 100 may receive a user input for inputting an image into an execution screen of an application, and determine whether a first image input method corresponding to the user input is supported by the application. Also, for example, referring to identification number 2, when the first image input method is not supported by the application, the electronic device 100 may input the image into the execution screen of the application by a second image input method different from the first image input method. The electronic device 100 may acquire a code of a framework for inputting an image by the second image input method, and provide the code to the application. For example, in a software stack as in FIG. 10, the electronic device 100 may acquire a code of a framework stage for the second image input method, and provide the acquired code to the application. The application may display an image on the execution screen of the application according to the second image input method, based on the provided code. Also, for example, for conversion of an image input method (e.g., conversion from the first image input method to the second image input method), source codes of areas other than a framework may be acquired (e.g., edited, created, or added) from the software stack, and allow the application to display the image on the execution screen of the application by the second image input method.

The electronic device 100 may be a smartphone, a tablet PC, a personal computer (PC), a smart TV, a mobile phone, a personal digital assistant (PDA), a laptop, a media player, a micro server, a global positioning system (GPS) device, an e-book reader, a digital broadcasting terminal, a navigation system, a kiosk, an MP3 player, a digital camera, a home appliance, and other mobile or non-mobile computing devices, but is not limited thereto. Also, the electronic device 100 may be a wearable device such as a watch with a display or glasses. However, the electronic device 100 is not limited to this, and the electronic device 100 may include all types of devices configured to display an execution screen of an application through a display and receive a user input.

In this document, images may be various types of images, such as still images, moving images, GIF images, images with sound, emoticons, and emojis. Also, an embodiment of the disclosure may be applied even when data files other than the images are inputted.

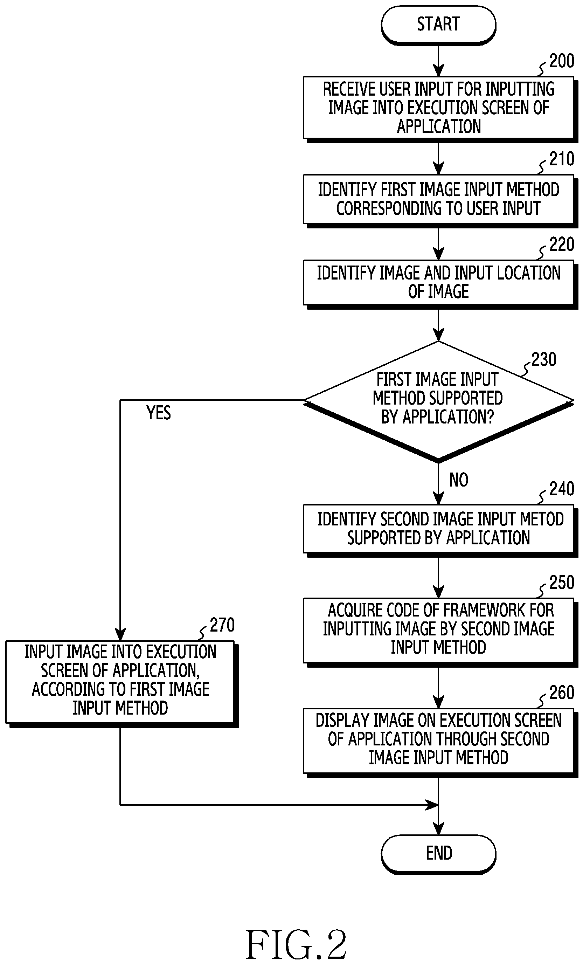

FIG. 2 is a flowchart of a method of inputting an image into an execution screen of an application, according to an embodiment of the disclosure.

In the following embodiment, each operation may be performed sequentially, but is not necessarily performed sequentially. For example, the order of each operation may be also changed, and at least two operations may be also performed in parallel.

According to an embodiment, it may be understood that operations 200 to 270 are performed in a processor (e.g., processor 920 of FIG. 9) of an electronic device (e.g., electronic device 100 of FIG. 1 and/or electronic device 901 of FIG. 9).

Referring to FIG. 2, in response to a user input of intending to input an image by an image input method not supported by the application, the electronic device may input the image into an execution screen of the application.

In operation 200, the electronic device 100 of an embodiment may receive a user input for inputting an image into an execution screen of an application. The user input for inputting the image into the execution screen of the application may be a user input for inserting the image into the execution screen of the application and displaying. The electronic device 100 may receive one or more user inputs for inputting an image into the execution screen of the application.

For example, the one or more user inputs for inputting the image into the execution screen may be user inputs through a first image input method. The first image input method may include at least one of, for example, a method of inputting an image selected from a list of images displayed through a keyboard, a method of inputting an image by a drag and drop, or a method of inputting an image by a copy and paste.

For example, the method of inputting the image selected from the list of images displayed through the keyboard may include an input method of displaying an image through a keyboard application and user's selecting the displayed image, and may include a touch input by a user's finger or a stylus pen.

However, the first image input method is not limited to this, and may be various image input methods for inputting an image to a display. For example, the first image input method may be an input method that is based on a user input to an image displayed on the display of the electronic device 100 in various methods, and may include, for example, a drag and drop on the image, a touch and select on the image, a copy and paste on the image, etc. Also, for example, the user input may be a selection input to an image displayed on an execution screen of an application as well as a keyboard application.

In operation 210, the electronic device 100 of an embodiment may identify a first image input method corresponding to the user input. The first image input method corresponding to the user input may include at least one of, for example, a method of inputting an image selected from a list of images displayed through a keyboard, a method of inputting an image by a drag and drop, or a method of inputting an image by a copy and paste.

For example, when the first image input method is the method of inputting the image selected from the list of images displayed through the keyboard, the user input may include a user input of selecting an input field of an application, a user input of calling an image list from a keyboard application activated according to the selecting of the input field, and a user input of selecting an image from the image list.

For example, when the first image input method is the method of inputting the image by the drag and drop, the user input may include a user input of selecting an input field of an application, a user input of calling an image list from a keyboard application activated according to the selecting of the input field, and a user input of selecting an image from the image list and dragging and dropping the selected image to an execution screen of the application. Also, for example, when the first image input method is the input method of inputting the image by the drag and drop, the user input may include a user input of selecting an image from an execution screen of another application and dragging and dropping the selected image to an execution screen (e.g., input field) of an application.

For example, when the first image input method is the method of inputting the image by the copy and paste, the user input may include at least one of a user input (e.g., long touch) of selecting a specific location on an execution screen of an application (e.g., input field within the execution screen of the application), a user input of selecting a paste item from a menu displayed according to the selecting of the specific location, a user input of selecting a clipboard item from a menu displayed according to the selecting of the specific location, or a user input of selecting an image within a clipboard. Also, for example, the image, which is a target of paste, may be an image copied in various situations. For example, the copied image may be an image stored in a memory (clipboard) through a user input or other inputs of long pressing the image on an execution screen of a specific application, and may be an image obtained by copying an image displayed by an application and other applications (e.g., Internet browser).

In operation 220, the electronic device 100 of an embodiment may identify an image and/or an input location of the image. The electronic device 100 may identify an image selected by the user input and/or a partial area, where the selected image is to be displayed, within the execution screen of the application.

For example, when the first image input method is the method of inputting the image selected from the list of images displayed through the keyboard, the electronic device 100 may identify an image selected by the user input from the image list of a keyboard application, as an image to be inputted to an application. For example, the electronic device 100 may identify the image selected by the user input in operation 200, as the image to be displayed on the execution screen of the application. Also, the electronic device 100 may identify an input field of the application or a partial area, where an input value through the input field is displayed, within the execution screen of the application (e.g., areas other than the input field in the execution screen of the application), as the input location of the image. For example, the input area of the image may be one of distinct areas within a GUI constituting the execution screen of the application. For example, the input area of the image may include an input field area, a data display area, etc. within the GUI of the execution screen of the application.

For example, when the first image input method is the method of inputting the image by the drag and drop, the electronic device 100 may identify the dragged and dropped image, as the image to be inputted to the application. Also, the electronic device 100 may identify a partial area, which includes a location where the image is dropped, within the execution screen of the application, as the input location of the image. For example, the electronic device 100 may identify a GUI area (e.g., an input field area of an application, a data display area, etc.) including a drop location, as the input location of the image, based on a coordinate value of the location where the image is dropped.

For example, when the first image input method is the method of inputting the image by the copy and paste, the electronic device 100 may identify the copied image as the image to be inputted to the application. Also, the electronic device 100 may identify a location where an image is to be pasted, as the input location of the image.

In operation 230, the electronic device 100 of an embodiment may determine whether the first image input method is supported by the application. The electronic device 100 may determine whether the first image input method is supported by the application, by identifying at least one image input method supported by the application and determining whether the at least one identified image input method is the first image input method corresponding to the user input.

For example, the application may support only some of the method of inputting the image selected from the list of images displayed through the keyboard, the method of inputting the image by the drag and drop, and the method of inputting the image by the copy and paste. Accordingly, the first image input method corresponding to the user input may not be included in the image input method supported by the application. For example, the electronic device 100 may determine whether the application has a keyboard handler, a drag-and-drop graphic handler, and/or a copy-and-paste graphic handler, but is not limited thereto. The electronic device 100 may determine the image input method supported by the application, through various methods other than the method of determining whether the application has the handler.

When it is determined that the first image input method is not supported by the application as a result of the determination of operation 230, in operation 240, the electronic device 100 of an embodiment may identify a second image input method supported by the application. According to an embodiment, the electronic device 100 may check whether there is a bypass path for the first image input method and, when the bypass path exists, the electronic device 100 may select an input method (e.g., the second image input method) for the bypass path. According to an embodiment, even before receiving the user input, the electronic device 100 may also perform an operation of identifying the image input method supported by the application in advance when executing the application.

For example, when the first image input method is the method of inputting the image selected from the list of images displayed through the keyboard and the first image input method is not supported by the application, the electronic device 100 may identify that the application supports the method of inputting the image by the drag and drop and/or the method of inputting the image by the copy and paste.

For example, when the first image input method is the method of inputting the image by the drag and drop and the first image input method is not supported by the application, the electronic device 100 may identify that the application supports the method of inputting the image selected from the list of images displayed through the keyboard and/or the method of inputting the image by the copy and paste.

For example, when the first image input method is the method of inputting the image by the copy and paste and the first image input method is not supported by the application, the electronic device 100 may identify that the application supports the method of inputting the image selected from the list of images displayed through the keyboard and/or the method of inputting the image by the drag and drop.

In operation 250, the electronic device 100 of an embodiment may acquire a code of a framework for inputting an image by the second image input method. The electronic device 100 may acquire the code of the framework for inputting the image by the second image input method, based on link information of the image to be inputted into the execution screen of the application, and the input location, where the image is to be inputted, within the execution screen of the application. The link information of the image may include, for example, uniform resource identifier (URI) information of the image. The link information of the image may include, for example, a location of an image stored in the electronic device, a location of an image stored in a clipboard, a web address of the image, etc.

For example, the framework may identify whether an image handler based on an input method specified for each application is not supported by a framework stage, and a code connecting a specified input method to another input method may have already been generated at the framework stage. Accordingly, the electronic device 100 may select the already generated code of a framework, and acquire a code of a framework for inputting an image by the second image input method wherein the selected code contains an image (e.g., link information of the image) inputted by the first image input method and is transmitted.

For example, when the second image input method supported by the application and different from the first image input method is the method of inputting the image by the drag and drop, the electronic device 100 may acquire a code of a framework for dragging and dropping the image. For example, the electronic device 100 may acquire a code for registering a DragListener for a partial area, where an image is to be inputted, within the execution screen of the application.

For example, the code of the framework for dragging and dropping the image may be acquired by editing at least part of the code of Table 1 below.

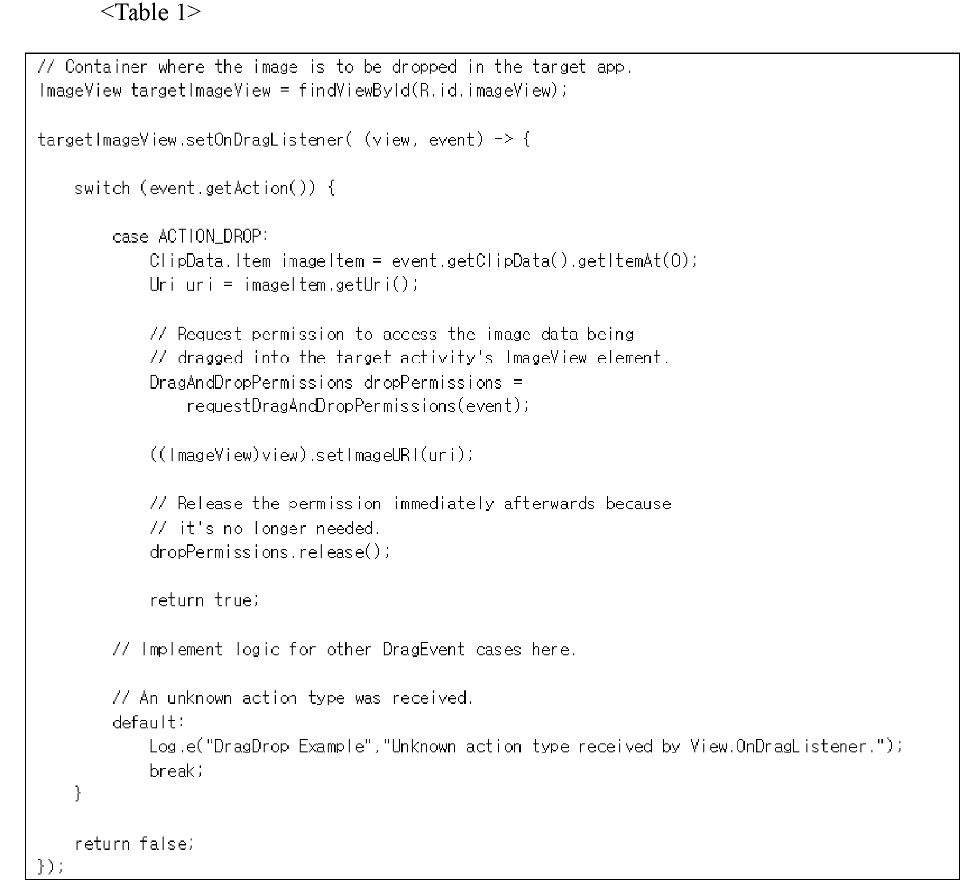

Also, for example, the code below (e.g., pseudo code) may be used to acquire the code of the framework for dragging and dropping the image.

| |
|---|
| ```
  Procedure onDrag(targetView, dragEvent) :
         Begin
                 Switch dragEvent.getAction():
                        Case ACTION_DROP:
                               // Custom action
         End
``` |

For example, when the second image input method supported by the application and different from the first image input method is the method of inputting the image by the drag and drop, the electronic device 100 may convert the user input into a user input of a drag-and-drop method that is the second image input method. For example, when a user input of selecting an image from the list of images displayed through the keyboard that is the first image input method occurs, the image may be inputted using the drag-and-drop method supported by the application.

For example, when the second image input method supported by the application and different from the first image input method is the method of inputting the image by the copy and paste, the electronic device 100 may acquire a code of a framework for copying and pasting the image. For example, the electronic device 100 may acquire a code of a framework for overriding an operation of pasting the image on a partial area, where the image is to be inputted, within the execution screen of the application.

For example, the code of the framework for copying and pasting the image may be acquired by editing at least part of the code of Table 2 below.

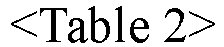

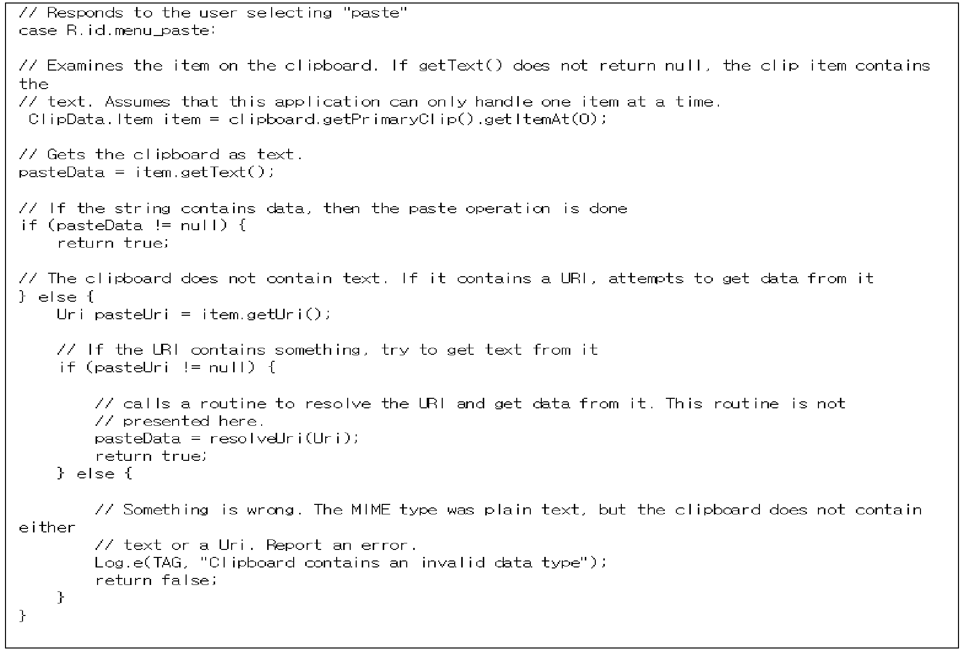

Also, for example, the code below (e.g., pseudo code) may be used to acquire the code of the framework for copying and pasting the image.

| |
|---|
| ```
 Procedure onPaste() :
         Begin
                // Custom action
                                  If clipboardManager has data and data is Image:
                                              ImageView pastedImage = get Image
 from cl ipboardManager
                       Execute your custom action using pastedImage
         End
``` |

For example, when the second image input method supported by the application and different from the first image input method is the method of inputting the image by the copy and paste, the electronic device 100 may convert the user input into a user input of a copy-and-paste method that is the second image input method. For example, when a user input of selecting an image from the list of images displayed through the keyboard that is the first image input method occurs, the image may be inputted using the copy-and-paste method supported by the application.

For example, when the second image input method supported by the application and different from the first image input method is the method of inputting the image selected from the list of images displayed through the keyboard, the electronic device 100 may acquire a code of a framework for inputting the image selected from the list of images displayed through the keyboard. For example, the electronic device 100 may acquire the code of the framework for overriding an InputConnection to input the image to a partial area, where the image is to be inputted, within the execution screen of the application.

For example, the code of the framework for inputting the image through the keyboard may be acquired by editing at least part of the code of Table 3 below.

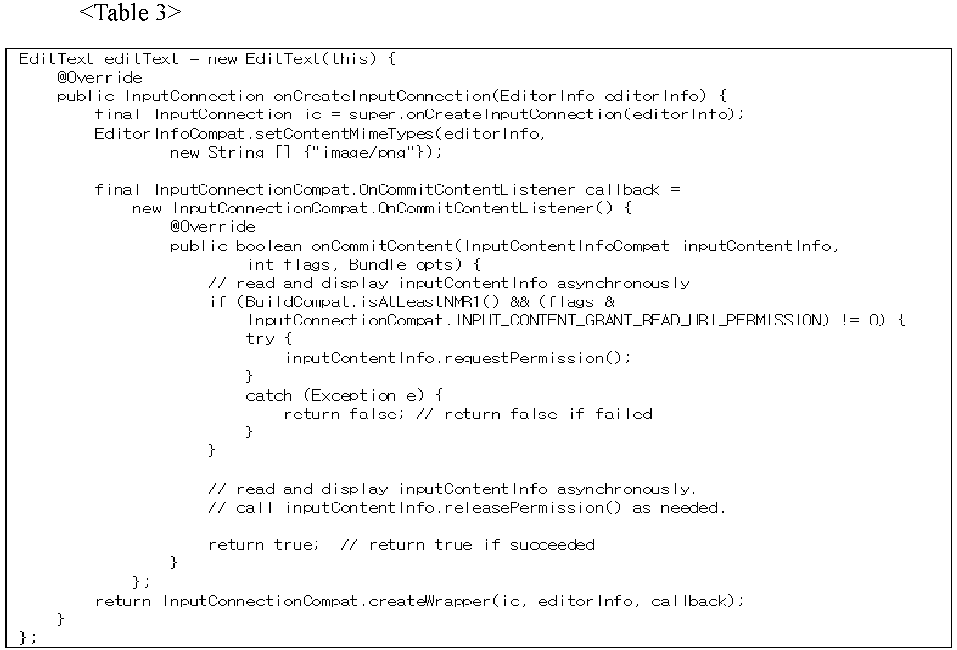

Also, for example, the code below (e.g., pseudo code) may be used to acquire the code of the framework for inputting the image through the keyboard.

| |
|---|
| ```
   Class MyEditText extends EditText:
    Begin
      Procedure MyEditText(context):
        Super (context)
      Function onCreateInputConnection(outAttrs):
        Begin
           JnputCorrectior ic = super.onCreateInputConnection(outAttrs)
           EditInfoCompat.setContentMimeTypes(outAttrs. ["image/png,"image/jpeg", ···])
           Function onCommitContent(inputContentInfo, flags, opts):
             Begin
               If VerfiyInputContent(InputContentInfo, flags, opts):
                // custom action
                 Return true
               End
               Return false
             End
           InputConnectionCompat.createWrapper(ic, outAttrs, orCommitContent)
           Return ic
          Ere
    End
``` |

For example, when the second image input method supported by the application and different from the first image input method is the method of inputting the image selected from the list of images displayed through the keyboard, the electronic device 100 may convert the user input into a user input being based on the method of inputting the image selected from the list of images displayed through the keyboard that is the second image input method. For example, when a user input of inputting the image by the drag and drop that is the first image input method occurs, the image may be inputted using the method of inputting the image selected from the list of images displayed through the keyboard that is supported by the application.

In operation 260, the electronic device 100 of an embodiment may display the image in the execution screen of the application by the second image input method. The electronic device 100 may display the image at a specific location in the execution screen of the application through the second image input method by using the framework code acquired in operation 250. For example, the framework code acquired in operation 250 may be delivered to the application, and the application may display the image in the execution screen of the application through the second image input method, based on the delivered framework code. Accordingly, the electronic device 100 may check whether there is a bypass path of the first image input method and, when the bypass path exists, the electronic device 100 may select an input method (e.g., the second image input method) for the bypass path, and display the image through the selected second image input method. In the above, operations 230, 240, 250, and 260 are described as separate operations, but the embodiment is not limited thereto. At least two or more of operations 230, 240, 250, and 260 may be also performed as a single operation by the electronic device 100.

When it is determined that the first image input method is supported by the application as a result of the determination of operation 230, in operation 270, the electronic device 100 may input the image into the execution screen of the application by the first image input method.

Meanwhile, although it has been described above that an image is inputted into an execution screen of an application according to a user input, the embodiment is not limited thereto. For example, the electronic device 100 may input data files other than the image into the execution screen of the application. In this case, the image input method may be a data input method, and a code of a framework for inputting data may be acquired.

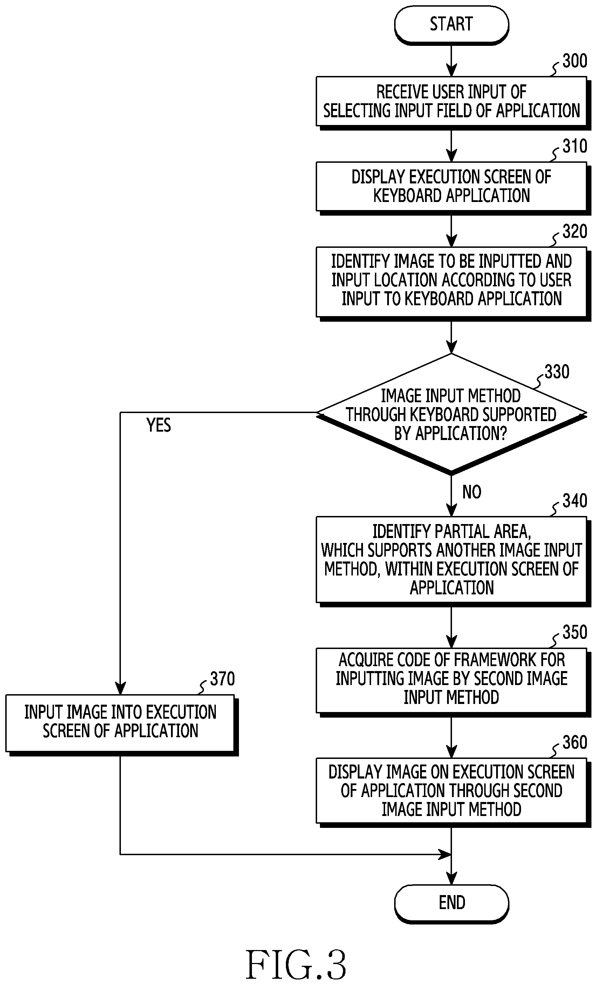

According to an embodiment, even when a user input for inserting data to the application is not supported by the application, a data input operation based on the user input may be performed, without modifying a code of the application, by modifying or selecting a code of a framework for another data input method, thereby improving user experience
FIG. 3 is a flowchart of a method of inputting an image to an application according to a user input of inputting an image through a keyboard, in an electronic device according to an embodiment of the disclosure.

In the following embodiment, each operation may be performed sequentially, but is not necessarily performed sequentially. For example, the order of each operation may be also changed, and at least two operations may be also performed in parallel.

According to an embodiment, it may be understood that operations 300 to 370 are performed in a processor (e.g., processor 920 of FIG. 9) of the electronic device (e.g., electronic device 100 of FIG. 1 and/or electronic device 901 of FIG. 9).

In FIG. 3, a first image input method may be a method of inputting an image selected from a list of images displayed through a keyboard.

In operation 300, the electronic device 100 of an embodiment may receive a user input of selecting an input field of an application. The input field of the application may be at least part of a graphical user interface (GUI) for receiving a user input to the application. For example, the input field may be a field for receiving a user's keyboard input in conjunction with a keyboard application.

For example, the method of inputting the image selected from the list of images displayed through the keyboard may include an input method of displaying the image through a keyboard application and selecting the displayed image by a user, and may include a touch input by a user's finger or a stylus pen.

However, the first image input method is not limited to this, and may be various image input methods for inputting an image to a display. For example, the first image input method may be an input method that is based on a user input to an image displayed on the display of the electronic device 100 in various methods. For example, the user input may be a selection input to an image displayed on an execution screen of an application as well as a keyboard application.

According to an embodiment, as a user input of selecting the input field of the application is received, the electronic device 100 may identify whether a partial area supports a method of inputting an image by a drag and drop, starting from a partial area close to the input field of the application. For example, the electronic device 100 may search for a partial area supporting a DragListener operation, starting from the partial area close to the input field of the application. Also, for example, the electronic device 100 may store a Listener of the searched partial area for a system for the sake of an image input operation that is based on the drag-and-drop input method. When a user selects the input field, the electronic device 100 may identify and store a Listener of a draggable View in advance, and improve a response speed of the electronic device 100 responsive to a user's image input.

In operation 310, the electronic device 100 of an embodiment may display an execution screen of a keyboard application. As the input field of the application is selected, the electronic device 100 may display the execution screen of the keyboard application on a screen of the electronic device 100.

In operation 320, the electronic device 100 of an embodiment may identify an image to be inputted and an input location of the image, according to a user input to the keyboard application. The electronic device 100 may identify the image to be inputted into the execution screen of the application and the input location of the image, according to the user input to the keyboard application. For example, the electronic device 100 may receive a user input of selecting an object for displaying a list of images within the execution screen of the keyboard application, and receive a user input of selecting an image to be inputted to the application from the displayed image list. In this case, for example, the electronic device 100 may identify the image selected from the image list, as the image to be inputted to the application. Also, for example, since the keyboard application is activated according to the user input of selecting the input field of the application, the electronic device 100 may identify, as the input location of the image, the input field and/or a partial area, where a value inputted to the input field is to be inputted, within the execution screen of the application. For example, the input area of the image may be one of distinct areas within a GUI constituting the execution screen of the application. For example, the input area of the image may include an input field area, a data display area, etc. within the GUI of the execution screen of the application.

In operation 330, the electronic device 100 of an embodiment may determine whether an image input method through a keyboard is supported by the application. For example, the electronic device 100 may determine whether the application includes a keyboard handler. However, the embodiment is not limited to this, and the electronic device 100 may determine the image input method supported by the application through various methods other than the method of determining whether the application has the handler.

When it is determined that the image input method through the keyboard is not supported by the application as a result of the determination of operation 330, in operation 340, the electronic device 100 may identify a partial area, which supports a second image input method, within the execution screen of the application. For example, the electronic device 100 may identify a partial area, which supports the method of inputting the image by the drag and drop, within the execution screen of the application. According to an embodiment, even before receiving a user input, the electronic device 100 may previously perform an operation of identifying an image input method supported by the application when executing the application as well.

According to an embodiment, the electronic device 100 may identify whether the partial area supports the method of inputting the image by the drag and drop, starting from the partial area close to the input field of the application. For example, in operation 340, the electronic device 100 may in advance search for a partial area supporting a DragListener operation, starting from the partial area close to the input field of the application. Also, the electronic device 100 may, for example, store a Listener of the searched partial area in advance for a system for the sake of an image input operation that is based on the drag-and-drop input method. Accordingly, the electronic device 100 may more quickly identify the partial area supporting the method of inputting the image by the drag and drop, and improve a response speed of the electronic device 100 responsive to a user's image input.

In operation 350, the electronic device 100 of an embodiment may acquire a code of a framework for inputting an image by the second image input method. For example, the framework may identify whether an image handler based on an input method specified for each application is not supported by a framework stage, and a code connecting a specified input method to another input method may have already been generated at the framework stage. Accordingly, the electronic device 100 may select the already generated code of the framework, and acquire a code of a framework for inputting an image by the second image input method wherein the selected code contains the image inputted by the first image input method and is transmitted. For example, the electronic device 100 may acquire a code of a framework stage for the second image input method, from the software stack of FIG. 10, and provide the acquired code to the application. The framework may provide a function and architecture necessary for an operation of the application. For example, a View System 11 within a framework 10 of the software stack of FIG. 10 may provide a plurality of views to the application. The plurality of views may be, for example, UI components such as an icon, a text, and an image. For example, the View System 11 may provide functions for changing an image input method. For example, View, Text View, etc. of the View System 11 may provide a method of changing an image input event of a corresponding view into an input event of another image input method.

For example, when the second image input method is the method of inputting the image by the drag and drop, the electronic device 100 may acquire a code of a framework for dragging and dropping the image. For example, the electronic device 100 may acquire a code for a drag-and-drop graphic handler. For example, the electronic device 100 may acquire a code for registering a DragListener for a partial area, where the image is to be inputted, within the execution screen of the application. Accordingly, the image and the input location of the image identified from the user input inputted by the keyboard input method may be used as source data and destination of the DragListener, and the application may execute a drop action (ACTION_DROP), based on source data and destination values of the DragListener, thereby inputting the image into the execution screen of the application by the drag-and-drop method. In this case, for example, the execution of at least one action among other types of actions (e.g., ACTION DRAG STARTED, ACTION DRAG ENTERED, ACTION DRAG EXITED, and ACTION DRAG ENDED) may be omitted.

For example, when the second image input method is a method of inputting an image by a copy and paste, the electronic device 100 may acquire a code of a framework for copying and pasting the image. For example, the electronic device 100 may acquire a code for a copy-and-paste graphic handler. For example, the electronic device 100 may acquire a code of a framework for overriding an operation of pasting the image on a partial area, where the image is to be inputted, within the execution screen of the application.

Also, for example, for conversion of an image input method (e.g., conversion from the first image input method to the second image input method), source codes of areas other than a framework may be acquired (e.g., edited, generated, or added) from the software stack, and allow the application to display the image on the execution screen of the application by the second image input method.

In operation 360, the electronic device 100 of an embodiment may provide the code of the framework to the application. The application may display an image at a specific location within the execution screen of the application through the second image input method, based on the provided code of the framework.

Meanwhile, when it is determined that the image input method through the keyboard is supported by the application as a result of the determination of operation 330, in operation 370, the electronic device 100 may input the image into the execution screen of the application.

Meanwhile, although it has been described above that an image is inputted into an execution screen of an application according to a user input, the embodiment is not limited thereto. For example, the electronic device 100 may input data files other than the image into the execution screen of the application. In this case, the image input method may be a data input method, and a code of a framework for data input may be generated.

According to an embodiment, even when a user input of inputting, to an application, data selected from a list of images displayed through a keyboard is not supported by the application, a data input operation based on the user input may be performed without modifying a code of the application, by modifying or selecting a code of a framework for another data input method, thereby improving the user experience

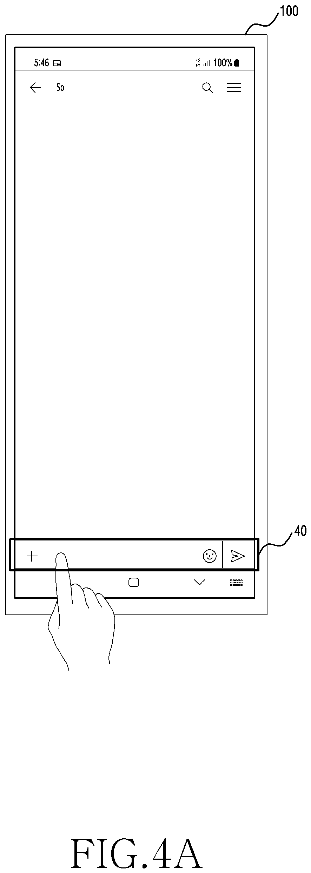

FIG. 4A is a diagram illustrating an example of an execution screen of an application, according to an embodiment of the disclosure.

Referring to FIG. 4A, the execution screen of the application may include an input field 40, and the electronic device 100 may receive a user input of selecting the input field 40. For example, the application may be a messenger application, and the electronic device 100 may receive a user input of selecting the input field 40 for inputting a text to the messenger application. However, the embodiment is not limited to this, and the application may be various applications enabling an image input through a keyboard as well as the messenger application. For example, the application may be a mail application, a word application, a note application, a game application, or a chat application, but is not limited thereto.

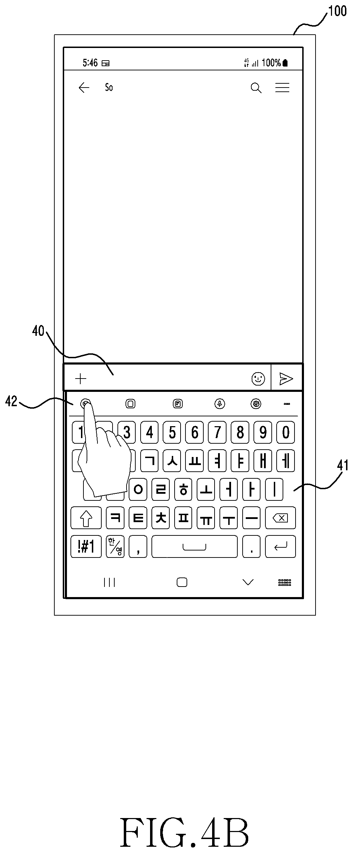

FIG. 4B is a diagram illustrating an example of displaying an execution screen of an application and an execution screen of a keyboard application, according to an embodiment of the disclosure.

Referring to FIG. 4B, as an input field 40 is selected by a user, the electronic device 100 may display an execution screen 41 of a keyboard application on a screen of the electronic device 100. For example, the keyboard application may be a keyboard application pre-installed in a terminal, such as Google Keyboard, Samsung Keyboard, etc., or may be a keyboard application downloaded and installed through an application store. According to an embodiment, the execution screen 41 of the keyboard application may include an object 42 for inputting an image through the keyboard application. Also, the electronic device 100 may receive a user input of selecting the object 42 within the execution screen 41 of the keyboard application.

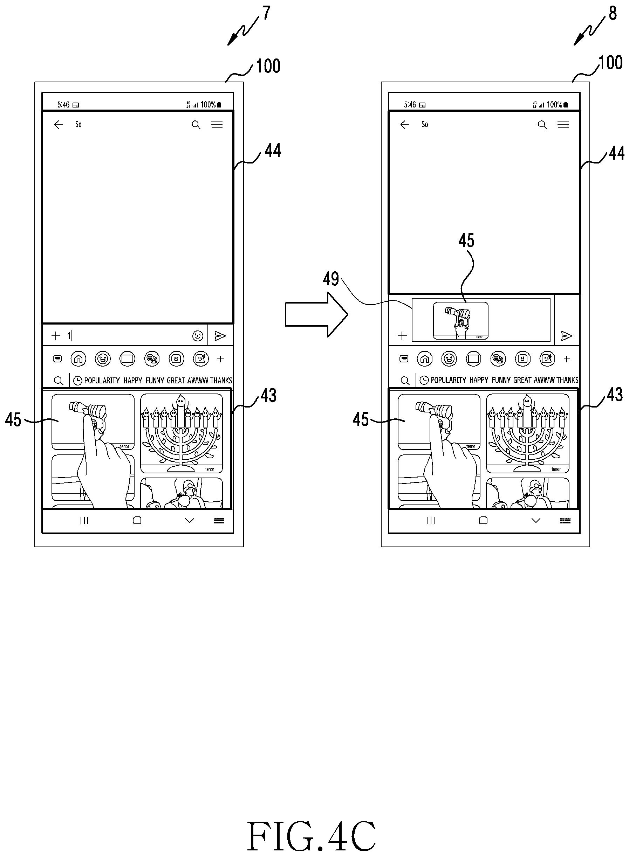

FIG. 4C is a diagram illustrating an example of displaying an image list within an execution screen of a keyboard application and displaying an image selected from the image list within an input field, according to an embodiment of the disclosure.

Referring to identification number 7 of FIG. 4C, as the input field 40 is selected in FIG. 4A, the electronic device 100 may identify that an image input method through a keyboard is not supported by an application. The identifying operation may operate according as the input field is selected and, for example, may be performed when the user input of selecting the object 42 within the execution screen 41 of the keyboard application is received in FIG. 4B or when a user input of selecting an image 45 is received. When it is identified that the image input method through the keyboard is not supported by the application, the electronic device 100 may search for a partial area 44, which supports a drag-and-drop input method, within an execution screen of the application.

Also, as the object 42 is selected in FIG. 4B, an image list 43 may be displayed within the execution screen of the keyboard application. The electronic device 100 may receive a user input of selecting the image 45 from images of the image list 43. For example, the image may include various types of images such as still images, moving images, GIF images, images including sound, emoticons, emojis, etc.

When the image input method through the keyboard is not supported by the application, the images of the image list 43 may not be displayed. For example, when the image input method through the keyboard is not supported by the application, the images of the image list 43 are not displayed, and an area where the image is to be displayed, for example, a hatched line or a gray color may be displayed. However, according to an embodiment of the disclosure, even when the image input method through the keyboard is not supported by the application, since the images may be bypassed and inputted through another input method supported by the application, the images may be displayed in the image list 43 as if the image input method through the keyboard was supported by the application as in FIG. 4C.

Referring to identification number 8 of FIG. 4C, as the image 45 is selected in identification number 7 of FIG. 4C, the image 45 may be inputted to and displayed in an input field 49. The electronic device 100 may acquire link information of the image 45, and identify a location, on a screen, of the input field 49 supporting a drag and drop. The electronic device 100 may acquire a code of a framework for a drag-and-drop image input, based on the link information of the image 45 and the location, on the screen, of the input field 49. Also, the electronic device 100 may provide the acquired code to the application, and the application may display the image 45 in the input field 49, based on the received code.

According to an embodiment, the image 45 displayed in the input field 49 may be displayed at a smaller size than the image 45 displayed in the image list 43.

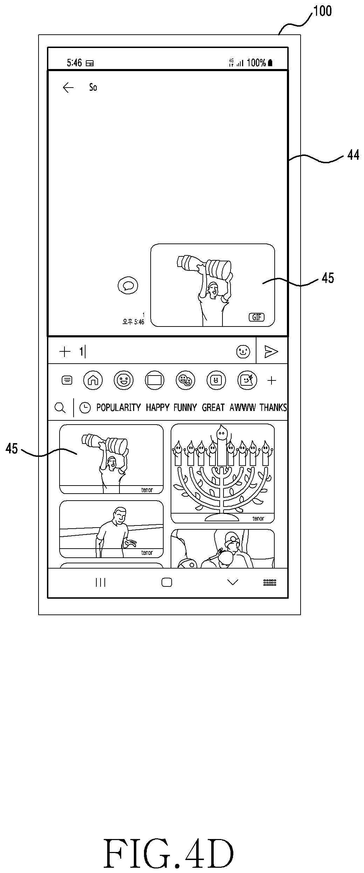

FIG. 4D is a diagram illustrating an example of inputting an image into an execution screen of an application, according to an embodiment of the disclosure.

As the image 45 is selected in FIG. 4C, the electronic device 100 may acquire link information of the image 45, and identify a location, on a screen of the electronic device 100, of a partial area 44 supporting a drag and drop. Referring to FIG. 4D, the electronic device 100 may acquire a code of a framework for a drag-and-drop image input, based on the link information of the image 45 and the location, on the screen, of the partial area 44. Also, the electronic device 100 may provide the generated code to the application, and the application may display the image 45 in the partial area 44, based on the received code.

For example, when the image 45 is selected from the image list 43 in identification number 7 of FIG. 4C, the image 45 may be displayed in the input field 49 as in identification number 8 of FIG. 4C and be finally inputted to the application through a user's additional input (e.g., user input of selecting a transmission button), or the image 45 may be directly inputted to the partial area 44 as in FIG. 4D.

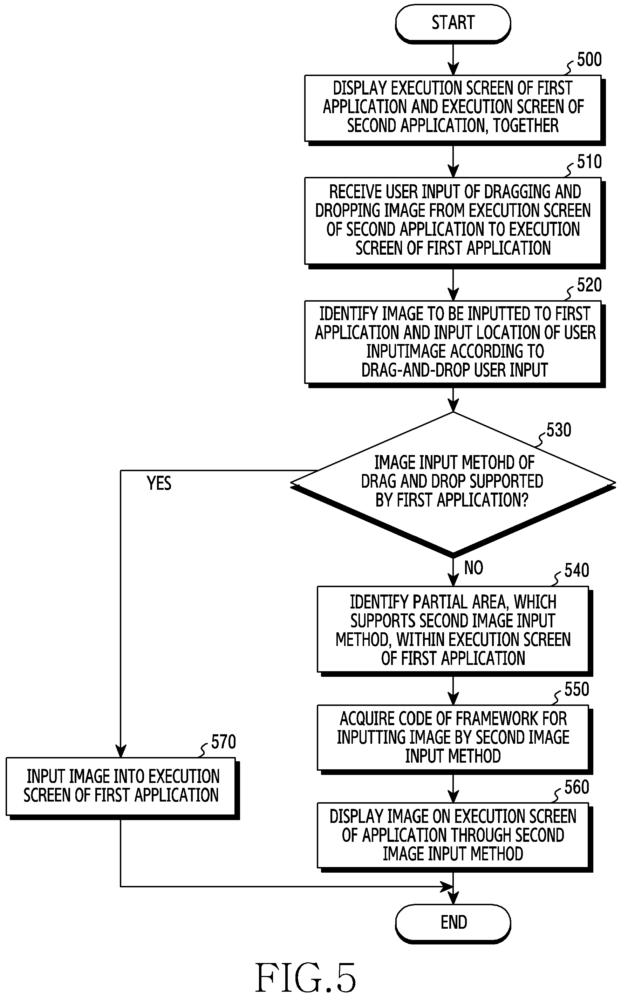

FIG. 5 is a flowchart of a method of inputting an image to an application according to a user input of dragging and dropping the image in an electronic device according to an embodiment of the disclosure.

In the following embodiment, each operation may be performed sequentially, but is not necessarily performed sequentially. For example, the order of each operation may be also changed, and at least two operations may be also performed in parallel.

According to an embodiment, it may be understood that operations 500 to 570 are performed in a processor (e.g., processor 920 of FIG. 9) of the electronic device (e.g., electronic device 100 of FIG. 1 and/or electronic device 901 of FIG. 9).

In FIG. 5, a first image input method may be a method of inputting an image according to a user input of dragging and dropping the image.

In operation 500, the electronic device 100 of an embodiment may display an execution screen of a first application and an execution screen of a second application, together. The electronic device 100 may display an image in the execution screen of the second application, and the electronic device 100 may display the execution screen of the first application and the execution screen of the second application on a screen of the electronic device 100, together, to drag and drop the image from the execution screen of the second application to the execution screen of the first application.

In operation 510, the electronic device 100 of an embodiment may receive a user input of dragging and dropping the image from the execution screen of the second application to the execution screen of the first application. The electronic device 100 may receive a user input of selecting the image in the execution screen of the second application, dragging the selected image to the execution screen of the first application, and dropping the dragged image to the execution screen of the first application.

In operation 520, the electronic device 100 of an embodiment may identify the image to be inputted into the execution screen of the first application and an input location of the user input, according to the drag-and-drop user input. For example, the electronic device 100 may identify the image that is a target of the drag-and-drop user input. For example, the electronic device 100 may identify the input location, where the image is to be inputted, within the execution screen of the first application, based on a location where the dragged image is dropped. In this case, the input location where the image is to be inputted may be a partial area within the execution screen of the first application.

In operation 530, the electronic device 100 of an embodiment may determine whether the image input method through the drag-and-drop user input is supported by the first application. For example, the electronic device 100 may determine whether the first application has a drag-and-drop graphic handler.

When it is determined that the image input method through the drag-and-drop user input is not supported by the first application as a result of the determination of operation 530, in operation 540, the electronic device 100 may identify a partial area, which supports a second image input method, within the execution screen of the first application.

In operation 550, the electronic device 100 of an embodiment may acquire a code of a framework for inputting the image by the second image input method.

For example, the framework may identify whether an image handler based on an input method specified for each application is not supported by a framework stage, and a code connecting a specified input method to another input method may have already been generated at the framework stage. Accordingly, the electronic device 100 may select the already generated code of the framework, and acquire a code of a framework for inputting the image by the second image input method wherein the selected code contains the image inputted by the first image input method and is transmitted.

For example, when the second image input method is a method of inputting an image by a copy and paste, the electronic device 100 may acquire a code of a framework for copying and pasting the image. For example, the electronic device 100 may acquire a code for a copy-and-paste graphic handler. For example, the electronic device 100 may acquire a code of a framework for overriding an operation of pasting the image on a partial area, where the image is to be inputted, within the execution screen of the first application.

For example, when the second image input method is a method of inputting an image selected from a list of images displayed through a keyboard, the electronic device 100 may generate a code of a framework for inputting the image selected from the list of images displayed through the keyboard. For example, the electronic device 100 may generate a code for a keyboard handler to input the image through the keyboard. For example, the electronic device 100 may generate a code of a framework for overriding an InputConnection to input the image to a partial area, where the image is to be inputted, within the execution screen of the first application.

In operation 560, the electronic device 100 of an embodiment may provide the code of the framework to the first application. The first application may display the image at a specific location within the execution screen of the first application through the second image input method, based on the provided code of the framework.

Meanwhile, when it is determined that the image input method through the drag-and-drop user input is supported by the first application as a result of the determination of operation 530, in operation 570, the electronic device 100 may input the image into the execution screen of the first application.

Meanwhile, although it has been described above that the image is inputted into the execution screen of the first application according to the user input, the embodiment is not limited thereto. For example, the electronic device 100 may input data files other than the image into the execution screen of the first application. In this case, the image input method may be a data input method, and a code of a framework for data input may be generated.

According to an embodiment, even when a user input of inputting data to an application by a drag and drop is not supported by the application, a data input operation based on the user input may be performed, without modifying a code of the application, by modifying or generating a code of a framework for another data input method, thereby improving the user experience.

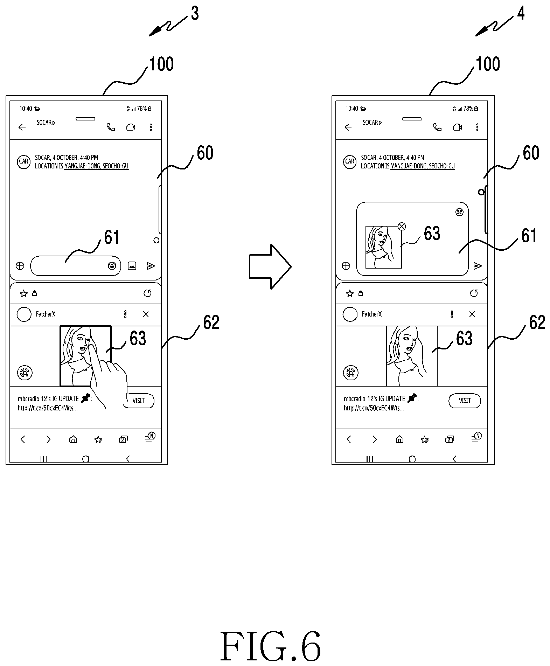

FIG. 6 is a diagram illustrating an example of inputting an image to an application when receiving a drag-and-drop user input, according to an embodiment of the disclosure.

Referring to identification number 3 of FIG. 6, an execution screen 60 of a first application and an execution screen 62 of a second application may be displayed on a screen of the electronic device 100. For example, the first application may be an application for sending a message, and the second application may be an application for Internet browsing.

The electronic device 100 may display the execution screen 60 of the first application and the execution screen 62 of the second application through a multi-window, together.

The electronic device 100 may receive a user input of dragging and dropping an image 63 from the execution screen 62 of the second application to an input field 61 of the execution screen 60 of the first application. According to an embodiment, the electronic device 100 may identify in advance whether a drag-and-drop image input method is supported before a drag-and-drop user input is received, but the embodiment is not limited thereto.

Referring to identification number 4 of FIG. 6, as the image 63 is dropped to the input field 61 of the execution screen 60 of the first application, the electronic device 100 may acquire link information of the image 63, and may identify a location, on a screen, of the input field 61, as a partial area, which supports an image input method through a keyboard, within the execution screen 60 of the first application. The electronic device 100 may generate a code of a framework for image input of the image input method through the keyboard, based on the link information of the image 63 and the input field 61. Also, the electronic device 100 may provide the generated code to the first application, and the first application may display the image 63 in the input field 61, based on the received code. In this way, the present invention improves user experience by enabling image pasting by changing the intermediate operation of the framework without modifying code of the application.

According to an embodiment, the image 63 displayed in the input field 61 may be displayed at a smaller size than the image 63 displayed in the execution screen 62 of the second application.

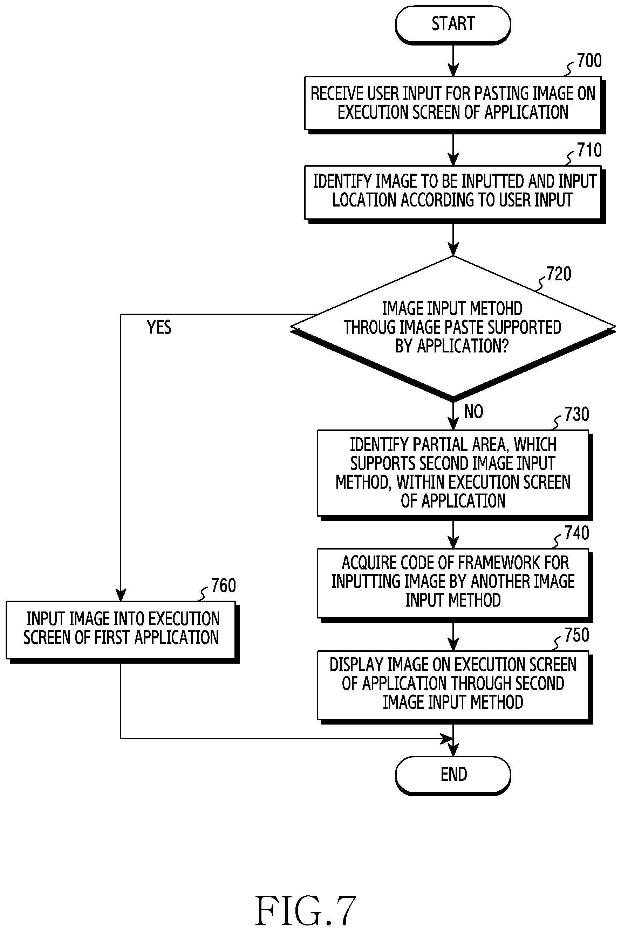

FIG. 7 is a flowchart of a method of inputting an image to an application according to a user input of pasting the image in an electronic device according to an embodiment of the disclosure.

In the following embodiment, each operation may be performed sequentially, but is not necessarily performed sequentially. For example, the order of each operation may be changed, and at least two operations may be performed in parallel.

According to an embodiment, it may be understood that operations 700 to 760 are performed in a processor (e.g., processor 920 of FIG. 9) of the electronic device (e.g., electronic device 100 of FIG. 1 and/or electronic device 901 of FIG. 9).

In FIG. 7, a first image input method may be a method of inputting an image according to a user input of pasting the image.

In operation 700, the electronic device 100 of an embodiment may receive a user input for pasting an image on an execution screen of an application. For example, when receiving a user input (e.g., long touch, right-click) of selecting a location, where the image is to be inputted, within the execution screen of the application, the electronic device 100 may display a menu including an object for paste. For example, even when the application does not support a function of pasting the image, the application may support a function of pasting a text and, in this case, the electronic device 100 may display a menu including an object for paste, based on the user input (e.g., long touch, right-click) to the execution screen of the application. Also, for example, the electronic device 100 may receive a user input of selecting an object for paste, and may display a list of images stored in a clipboard. Also, the electronic device 100 may receive a user input of selecting an image from the clipboard. For example, the images stored in the clipboard may be images that are stored in the clipboard by at least one other application, based on a user input to the at least one other application.

In operation 710, the electronic device 100 of an embodiment may identify an image to be inputted and an input location, according to the user input. The electronic device 100 may identify an image selected from a list of images stored in a clipboard. Also, the electronic device 100 may identify an input location of the image, based on the user input (e.g., long touch, right-click) of selecting the location, where the image is to be inputted, within the execution screen of the application.

In operation 720, the electronic device 100 of an embodiment may determine whether an image input method through image paste is supported by the application. For example, the electronic device 100 may determine whether the application including the input location of the image has a graphic handler of paste.

When it is determined that the image input method through the image paste is not supported by the application as a result of the determination of operation 720, in operation 730, the electronic device 100 may identify a partial area, which supports a second image input method, within the execution screen of the application.

In operation 740, the electronic device 100 of an embodiment may generate a code of a framework for inputting the image by the second image input method.

For example, when the second image input method is a method of inputting an image by a drag and drop, the electronic device 100 may generate a code of a framework for dragging and dropping the image. For example, the electronic device 100 may generate a code for a drag-and-drop graphic handler. For example, the electronic device 100 may generate a code for registering a DragListener for a partial area, where the image is to be inputted, within the execution screen of the application.

For example, when the second image input method is a method of inputting an image selected from a list of images displayed through a keyboard, the electronic device 100 may generate a code of a framework for inputting the image selected from the list of images displayed through the keyboard. For example, the electronic device 100 may generate a code for a keyboard handler for image input through the keyboard. For example, the electronic device 100 may generate a code of a framework for overriding an InputConnection, to input the image to a partial area, where the image is to be inputted, within the execution screen of the application.

In operation 750, the electronic device 100 of an embodiment may provide the code of the framework to the application. The application may display an image at a specific location within the execution screen of the application through the second image input method, based on the provided code of the framework.

Meanwhile, when it is determined that the image input method through the image paste is supported by the application as a result of the determination of operation 720, in operation 760, the electronic device 100 may input the image into the execution screen of the application.

Meanwhile, although it has been described above that the image is inputted into the execution screen of the application according to the user input, the embodiment is not limited thereto. For example, the electronic device 100 may input data files other than the image into the execution screen of the application. In this case, the image input method may be a data input method, and a code of a framework for data input may be generated.

According to an embodiment, even when a user input of inputting data to an application through a copy and paste is not supported by the application, a data input operation based on the user input may be performed, without modifying a code of the application, by modifying or generating a code of a framework for another data input method, thereby improving the user experience.

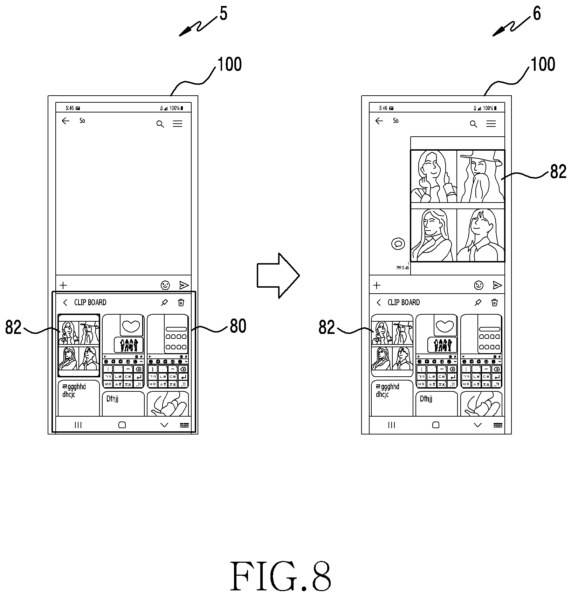

FIG. 8 is a diagram illustrating an example of inputting an image to an application when receiving a user input for image paste, according to an embodiment of the disclosure.

Referring to identification number 5 of FIG. 8, an image list 80 stored in a clipboard may be displayed on an execution screen of an application, and the electronic device 100 may receive a user input of selecting an image 82 within the image list 80. Images within the image list 80 stored in the clipboard may be images copied in advance by a user.

Referring to identification number 6 of FIG. 8, as the image 82 within the image list 80 is selected, the electronic device 100 of an embodiment may acquire link information of the image 82, and may identify a location, where the image 82 is to be inputted, within the execution screen of the application. The electronic device 100 may generate a code of a framework for a drag-and-drop image input, based on the link information of the image 82 and the location where the image 82 is to be inputted. Also, the electronic device 100 may provide the generated code to the application, and the application may display the image 82 in the execution screen of the application, based on the received code.

Meanwhile, although it has been described above that the image is inputted into the execution screen of the application according to the user input, the embodiment is not limited thereto. For example, the electronic device 100 may input data files other than the image into the execution screen of the application. In this case, the image input method may be a data input method, and a code of a framework for data input may be generated.

A method of inputting an image into an execution screen of an application in an electronic device of an embodiment of the disclosure may include receiving (e.g., operation 200) at least one user input for inputting an image into the execution screen of the application, identifying (e.g., operation 210) a first image input method corresponding to the at least one user input, identifying (e.g., operation 220) the image and an input location, on the execution screen, of the image, based on the at least one user input, identifying (e.g., operation 230) whether the first image input method is supported by the application, identifying (e.g., operation 240) a second image input method supported by the application in response to the first image input method not supported by the application, generating (e.g., operation 250) a code of a framework for inputting the image into the execution screen of the application by the second image input method, based on the image and the input location, and providing (e.g., operation 260) the generated code of the framework to the application.

Also, according to an embodiment, as the acquired code of the framework is provided to and used by the application, the image may be inputted into the execution screen of the application.

Also, according to an embodiment, identifying the second image input method supported by the application may identify whether a partial area, which corresponds to the input location, within the execution screen supports the second image input method.

Also, according to an embodiment, the second image input method may be selected from among a plurality of image input methods supported by the application.

Also, according to an embodiment, when the first image input method is a method of inputting an image selected from a list of images displayed through a keyboard running on the application, the at least one user input may comprise a user input of selecting an input field of the application.

Also, according to an embodiment, whether the first image input method is supported by the application may be identified in response to the reception of the user input of selecting the input field.

Also, according to an embodiment, the second image input method may comprise a method of inputting an image by a drag and drop, and identifying the second image input method supported by the application may identify whether a partial area, which corresponds to the input location, within the execution screen of the application supports a function of recognizing the drag and drop.

Also, according to an embodiment, the second image input method supported by the application may be identified by identifying whether a plurality of partial areas within the execution screen of the application support the function of recognizing the drag and drop.

Also, according to an embodiment, the second image input method may comprise a method of inputting an image by a copy and paste.

Also, according to an embodiment, the first image input method may comprise at least one of a method of inputting an image selected from a list of images displayed through a keyboard running on the application, a method of inputting an image by a drag and drop, or a method of inputting an image by a copy and paste.

Also, according to an embodiment, the second image input method may be an input method different from the first image input method, among the method of inputting the image selected from the list of images displayed through the keyboard running on the application, the method of inputting the image by the drag and drop, or the method of inputting the image by the copy and paste.

Fig. 9 is a block diagram illustrating an electronic device 901 in a network environment 900 according to various embodiments. Referring to Fig. 9, the electronic device 901 in the network environment 900 may communicate with an electronic device 902 via a first network 998 (e.g., a short-range wireless communication network), or at least one of an electronic device 904 or a server 908 via a second network 999 (e.g., a long-range wireless communication network). According to an embodiment, the electronic device 901 may communicate with the electronic device 904 via the server 908. According to an embodiment, the electronic device 901 may include a processor 920, memory 930, an input module 950, a sound output module 955, a display module 960, an audio module 970, a sensor module 976, an interface 977, a connecting terminal 978, a haptic module 979, a camera module 980, a power management module 988, a battery 989, a communication module 990, a subscriber identification module(SIM) 996, or an antenna module 997. In some embodiments, at least one of the components (e.g., the connecting terminal 978) may be omitted from the electronic device 901, or one or more other components may be added in the electronic device 901. In some embodiments, some of the components (e.g., the sensor module 976, the camera module 980, or the antenna module 997) may be implemented as a single component (e.g., the display module 960).

The processor 920 may execute, for example, software (e.g., a program 940) to control at least one other component (e.g., a hardware or software component) of the electronic device 901 coupled with the processor 920, and may perform various data processing or computation. According to one embodiment, as at least part of the data processing or computation, the processor 920 may store a command or data received from another component (e.g., the sensor module 976 or the communication module 990) in volatile memory 932, process the command or the data stored in the volatile memory 932, and store resulting data in non-volatile memory 934. According to an embodiment, the processor 920 may include a main processor 921 (e.g., a central processing unit (CPU) or an application processor (AP)), or an auxiliary processor 923 (e.g., a graphics processing unit (GPU), a neural processing unit (NPU), an image signal processor (ISP), a sensor hub processor, or a communication processor (CP)) that is operable independently from, or in conjunction with, the main processor 921. For example, when the electronic device 901 includes the main processor 921 and the auxiliary processor 923, the auxiliary processor 923 may be adapted to consume less power than the main processor 921, or to be specific to a specified function. The auxiliary processor 923 may be implemented as separate from, or as part of the main processor 921.

The auxiliary processor 923 may control at least some of functions or states related to at least one component (e.g., the display module 960, the sensor module 976, or the communication module 990) among the components of the electronic device 901, instead of the main processor 921 while the main processor 921 is in an inactive (e.g., sleep) state, or together with the main processor 921 while the main processor 921 is in an active state (e.g., executing an application). According to an embodiment, the auxiliary processor 923 (e.g., an image signal processor or a communication processor) may be implemented as part of another component (e.g., the camera module 980 or the communication module 990) functionally related to the auxiliary processor 923. According to an embodiment, the auxiliary processor 923 (e.g., the neural processing unit) may include a hardware structure specified for artificial intelligence model processing. An artificial intelligence model may be generated by machine learning. Such learning may be performed, e.g., by the electronic device 901 where the artificial intelligence is performed or via a separate server (e.g., the server 908). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 930 may store various data used by at least one component (e.g., the processor 920 or the sensor module 976) of the electronic device 901. The various data may include, for example, software (e.g., the program 940) and input data or output data for a command related thererto. The memory 930 may include the volatile memory 932 or the non-volatile memory 934.

The program 940 may be stored in the memory 930 as software, and may include, for example, an operating system (OS) 942, middleware 944, or an application 946.

The input module 950 may receive a command or data to be used by another component (e.g., the processor 920) of the electronic device 901, from the outside (e.g., a user) of the electronic device 901. The input module 950 may include, for example, a microphone, a mouse, a keyboard, a key (e.g., a button), or a digital pen (e.g., a stylus pen).

The sound output module 955 may output sound signals to the outside of the electronic device 901. The sound output module 955 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 960 may visually provide information to the outside (e.g., a user) of the electronic device 901. The display module 960 may include, for example, a display, a hologram device, or a projector and control circuitry to control a corresponding one of the display, hologram device, and projector. According to an embodiment, the display module 960 may include a touch sensor adapted to detect a touch, or a pressure sensor adapted to measure the intensity of force incurred by the touch.

The audio module 970 may convert a sound into an electrical signal and vice versa. According to an embodiment, the audio module 970 may obtain the sound via the input module 950, or output the sound via the sound output module 955 or a headphone of an external electronic device (e.g., an electronic device 902) directly (e.g., wiredly) or wirelessly coupled with the electronic device 901.

The sensor module 976 may detect an operational state (e.g., power or temperature) of the electronic device 901 or an environmental state (e.g., a state of a user) external to the electronic device 901, and then generate an electrical signal or data value corresponding to the detected state. According to an embodiment, the sensor module 976 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 977 may support one or more specified protocols to be used for the electronic device 901 to be coupled with the external electronic device (e.g., the electronic device 902) directly (e.g., wiredly) or wirelessly. According to an embodiment, the interface 977 may include, for example, a high definition multimedia interface (HDMI), a universal serial bus (USB) interface, a secure digital (SD) card interface, or an audio interface.

A connecting terminal 978 may include a connector via which the electronic device 901 may be physically connected with the external electronic device (e.g., the electronic device 902). According to an embodiment, the connecting terminal 978 may include, for example, a HDMI connector, a USB connector, a SD card connector, or an audio connector (e.g., a headphone connector).

The haptic module 979 may convert an electrical signal into a mechanical stimulus (e.g., a vibration or a movement) or electrical stimulus which may be recognized by a user via his tactile sensation or kinesthetic sensation. According to an embodiment, the haptic module 979 may include, for example, a motor, a piezoelectric element, or an electric stimulator.

The camera module 980 may capture a still image or moving images. According to an embodiment, the camera module 980 may include one or more lenses, image sensors, image signal processors, or flashes.

The power management module 988 may manage power supplied to the electronic device 901. According to one embodiment, the power management module 988 may be implemented as at least part of, for example, a power management integrated circuit (PMIC).

The battery 989 may supply power to at least one component of the electronic device 901. According to an embodiment, the battery 989 may include, for example, a primary cell which is not rechargeable, a secondary cell which is rechargeable, or a fuel cell.

The communication module 990 may support establishing a direct (e.g., wired) communication channel or a wireless communication channel between the electronic device 901 and the external electronic device (e.g., the electronic device 902, the electronic device 904, or the server 908) and performing communication via the established communication channel. The communication module 990 may include one or more communication processors that are operable independently from the processor 920 (e.g., the application processor (AP)) and supports a direct (e.g., wired) communication or a wireless communication. According to an embodiment, the communication module 990 may include a wireless communication module 992 (e.g., a cellular communication module, a short-range wireless communication module, or a global navigation satellite system (GNSS) communication module) or a wired communication module 994 (e.g., a local area network (LAN) communication module or a power line communication (PLC) module). A corresponding one of these communication modules may communicate with the external electronic device via the first network 998 (e.g., a short-range communication network, such as Bluetooth^{™}, wireless-fidelity (Wi-Fi) direct, or infrared data association (IrDA)) or the second network 999 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 992 may identify and authenticate the electronic device 901 in a communication network, such as the first network 998 or the second network 999, using subscriber information (e.g., international mobile subscriber identity (IMSI)) stored in the subscriber identification module 996.

The wireless communication module 992 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 992 may support a high-frequency band (e.g., the mmWave band) to achieve, e.g., a high data transmission rate. The wireless communication module 992 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 992 may support various requirements specified in the electronic device 901, an external electronic device (e.g., the electronic device 904), or a network system (e.g., the second network 999). According to an embodiment, the wireless communication module 992 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 997 may transmit or receive a signal or power to or from the outside (e.g., the external electronic device) of the electronic device 901. According to an embodiment, the antenna module 997 may include an antenna including a radiating element composed of a conductive material or a conductive pattern formed in or on a substrate (e.g., a printed circuit board (PCB)). According to an embodiment, the antenna module 997 may include a plurality of antennas (e.g., array antennas). In such a case, at least one antenna appropriate for a communication scheme used in the communication network, such as the first network 998 or the second network 999, may be selected, for example, by the communication module 990 (e.g., the wireless communication module 992) from the plurality of antennas. The signal or the power may then be transmitted or received between the communication module 990 and the external electronic device via the selected at least one antenna. According to an embodiment, another component (e.g., a radio frequency integrated circuit (RFIC)) other than the radiating element may be additionally formed as part of the antenna module 997.

According to various embodiments, the antenna module 997 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 901 and the external electronic device 904 via the server 908 coupled with the second network 999. Each of the electronic devices 902 or 904 may be a device of a same type as, or a different type, from the electronic device 901. According to an embodiment, all or some of operations to be executed at the electronic device 901 may be executed at one or more of the external electronic devices 902, 904, or 908. For example, if the electronic device 901 should perform a function or a service automatically, or in response to a request from a user or another device, the electronic device 901, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 901. The electronic device 901 may provide the outcome, with or without further processing of the outcome, as at least part of a reply to the request. To that end, a cloud computing, distributed computing, mobile edge computing (MEC), or client-server computing technology may be used, for example. The electronic device 901 may provide ultra low-latency services using, e.g., distributed computing or mobile edge computing. In another embodiment, the external electronic device 904 may include an internet-of-things (IoT) device. The server 908 may be an intelligent server using machine learning and/or a neural network. According to an embodiment, the external electronic device 904 or the server 908 may be included in the second network 999. The electronic device 901 may be applied to intelligent services (e.g., smart home, smart city, smart car, or healthcare) based on 5G communication technology or IoT-related technology.

According to an embodiment, the electronic device 901 of FIG. 9 may be the electronic device 100 of FIGS. 1 to 8, and the processor 920 of FIG. 9 may perform an operation of the electronic device 100 described in FIGS. 1 to 8.

According to an embodiment, the processor 920 may receive a user input for inputting an image into an execution screen of an application. The user input for inputting the image into the execution screen of the application may be a user input for inserting the image into the execution screen of the application and displaying the image. The processor 920 may receive one or more user inputs for inputting the image into the execution screen of the application.

According to an embodiment, the processor 920 may identify a first image input method corresponding to the user input. The first image input method corresponding to the user input may include at least one of, for example, a method of inputting an image selected from a list of images displayed through a keyboard, a method of inputting an image by a drag and drop, or a method of inputting an image by a copy and paste.

For example, when the first image input method is the method of inputting the image selected from the list of images displayed through the keyboard, the user input may include a user input of selecting an input field of an application, a user input of calling a list of images in a keyboard application activated according to the selecting of the input field, and a user input of selecting the image from the image list.

For example, when the first image input method is the method of inputting the image by the drag and drop, the user input may include a user input of selecting the image and dragging and dropping the selected image to the execution screen of the application.

For example, when the first image input method is the method of inputting the image by the copy and paste, the user input may include at least one of a user input (e.g., long touch) of selecting a specific location on the execution screen of the application, a user input of selecting a paste item from a menu displayed according to the selecting of the specific location, a user input of selecting a clipboard item from a menu displayed according to the selecting of the specific location, or a user input of selecting the image within the clipboard.

According to an embodiment, the processor 920 may identify an image and an input location of the image. The processor 920 may identify the image selected by a user input, and a partial area, where the selected image is to be displayed, on the execution screen of the application.

For example, when the first image input method is the method of inputting the image selected from the list of images displayed through the keyboard, the processor 920 may identify the image selected from the image list of a keyboard application, as an image to be inputted to the application. Also, the processor 920 may identify an input field of the application or a partial area, where an input value through the input field is displayed, of the execution screen of the application, as the input location of the image.

For example, when the first image input method is the method of inputting the image by the drag and drop, the processor 920 may identify the dragged and dropped image, as the image to be inputted to the application. Also, the processor 920 may identify a partial area, which includes a location where the image is dropped, within the execution screen of the application, as the input location of the image.

For example, when the first image input method is the method of inputting the image by the copy and paste, the processor 920 may identify the copied image, as the image to be inputted to the application. Also, the processor 920 may identify a location where the image is to be pasted, as the input location of the image.

According to an embodiment, the processor 920 may determine whether the first image input method is supported by the application. For example, the application may support only some of the method of inputting the image selected from the list of images displayed through the keyboard, the method of inputting the image by the drag and drop, and the method of inputting the image by the copy and paste. Accordingly, the first image input method corresponding to the user input may not be included in the input methods supported by the application. For example, the processor 920 may determine whether the application has a keyboard handler, a drag-and-drop graphic handler, and/or a copy-and-paste graphic handler.

According to an embodiment, when it is determined that the first image input method is not supported by the application, the processor 920 may identify a second image input method supported by the application.

For example, when the first image input method is the method of inputting the image selected from the list of images displayed through the keyboard and the first image input method is not supported by the application, the processor 920 may identify that the application supports the method of inputting the image by the drag and drop and/or the method of inputting the image by the copy and paste.

For example, when the first image input method is the method of inputting the image by the drag and drop and the first image input method is not supported by the application, the processor 920 may identify that the application supports the method of inputting the image selected from the list of images displayed through to the keyboard and/or the method of inputting the image by the copy and paste.

For example, when the first image input method is the method of inputting the image by the copy and paste and the first image input method is not supported by the application, the processor 920 may identify that the application supports the method of inputting the image selected from the list of images displayed through the keyboard and/or the method of inputting the image by the drag and drop.

According to an embodiment, the processor 920 may acquire a code of a framework for inputting an image by a second image input method. The processor 920 may acquire the code of the framework for inputting the image by the second image input method, based on link information of the image to be inputted into the execution screen of the application and an input location, where the image is to be inputted, within the execution screen of the application. The link information of the image may include, for example, uniform resource identifier (URI) information of the image.

For example, when the second image input method supported by the application and different from the first image input method is the method of inputting the image by the drag and drop, the processor 920 may acquire a code of a framework for dragging and dropping the image. For example, the processor 920 may acquire a code for registering a DragListner for a partial area, where the image is to be inputted, within the execution screen of the application.

For example, the processor 920 may acquire the code of the framework for dragging and dropping the image, by editing at least part of the code of Table 1.

For example, when the second image input method supported by the application and different from the first image input method is a method of inputting an image by copying and pasting, the processor 920 may acquire a code of a framework for copying and pasting an image. For example, the processor 920 may acquire a code of a framework for overriding an operation of pasting an image on a partial area, where the image is to be inputted, within the execution screen of the application.

For example, the processor 920 may acquire the code of the framework for copying and pasting the image, by editing at least part of the code of Table 2.

For example, when the second image input method supported by the application and different from the first image input method is the method of inputting the image selected from the list of images displayed through the keyboard, the processor 920 may acquire a code of a framework for inputting an image selected from the list of image displayed through the keyboard. For example, the processor 920 may acquire a code of a framework for overriding an InputConnection to input the image to a partial area, where the image is to be inputted, within the execution screen of the application.

For example, the processor 920 may acquire the code of the framework for inputting the image through the keyboard, by editing at least part of the code of Table 3.

According to an embodiment, the processor 920 may provide the code of the framework to the application. The application may display the image at a specific location within the execution screen of the application through the second image input method, based on the provided code of the framework.

According to an embodiment, when it is determined that the first image input method is supported by the application, the processor 920 may input the image into the execution screen of the application according to the first image input method.

Meanwhile, although it has been described above that the image is inputted into the execution screen of the application according to the user input, the embodiment is not limited thereto. For example, the electronic device 100 may input data files other than the image into the execution screen of the application. In this case, the image input method may be a data input method, and a code of a framework for inputting data may be acquired.

According to an embodiment of the disclosure, an electronic device (e.g., 100) of inputting an image into an execution screen of an application may include a display (e.g., 960), a memory (e.g., 930) configured to store instructions, and at least one processor (e.g., 920) operatively connected to the display and the memory and executing the instructions. The at least one processor may be configured to, by executing the instructions, receive at least one user input for inputting the image into the execution screen of the application, identify a first image input method corresponding to the at least one user input, identify the image and an input location, on the execution screen, of the image, based on the at least one user input, identify whether the first image input method is supported by the application, identify a second image input method supported by the application in response to the first image input method not being supported by the application, acquire a code of a framework for inputting the image into the execution screen of the application by the second image input method, based on the image and the input location, and provide the acquired code of the framework to the application.

Also, according to an embodiment, as the acquired code of the framework is provided to and used by the application, the image may be inputted into the execution screen of the application.

Also, according to an embodiment, the at least one processor may be configured to, by executing the instructions, identify whether a partial area, which corresponds to the input location, within the execution screen of the application supports the second image input method.

Also, according to an embodiment, the second image input method may be selected from among a plurality of image input methods supported by the application.

Also, according to an embodiment, when the first image input method is a method of inputting an image selected from a list of images displayed through a keyboard running on the application, the at least one user input may include a user input of selecting an input field of the application.

Also, according to an embodiment, the at least one processor may be configured to, by executing the instructions, identify whether the first image input method is supported by the application in response to the reception of the user input of selecting the input field.

Also, according to an embodiment, the second image input method may include a method of inputting an image by a drag and drop, and the at least one processor may be configured to, by executing the instructions, identify whether a partial area, which corresponds to the input location, within the execution screen of the application supports a function of recognizing the drag and drop.

Also, according to an embodiment, the second image input method supported by the application may be identified by identifying whether a plurality of partial areas within the execution screen of the application support the function of recognizing the drag and drop.

Also, according to an embodiment, the second image input method may include a method of inputting an image by a copy and paste.

According to an embodiment of the disclosure, a computer-readable recording medium recording a program for executing a method of inputting an image into an execution screen of an application may include receiving at least one user input for inputting the image into the execution screen of the application, identifying a first image input method corresponding to the at least one user input, identifying the image and an input location, on the execution screen, of the image, based on the at least one user input, identifying whether the first image input method is supported by the application, identifying a second image input method supported by the application in response to the first image input method not being supported by the application, acquiring a code of a framework for inputting the image into the execution screen of the application by the second image input method, based on the image and the input location, and providing the acquired code of the framework to the application.

Electronic devices of various embodiments disclosed in this document may be various types of devices. The electronic devices may include, for example, portable communication devices (e.g., smart phones), computer devices, portable multimedia devices, portable medical devices, cameras, wearable devices, or home appliances. The electronic devices of the embodiments of this document are not limited to the above-described devices.

Various embodiments of this document and the terms used herein are not intended to limit technical features described in this document to specific embodiments, and should be understood as including various changes, equivalents, or alternatives of the corresponding embodiments. In connection with a description of the drawings, similar reference numerals may be used for similar or related components. The singular form of a noun corresponding to an item may include one item or a plurality of items, unless relevant context clearly indicates otherwise. In this document, each of phrases such as "A or B", "at least one of A and B", "at least one of A or B", "A, B or C", "at least one of A, B and C", and "at least one of A, B, or C" may include any one of items listed together in the corresponding phrase, or any possible combination thereof. Terms such as "a first", "a second", "the first" or "the second" may be used simply to distinguish one component from another component, and do not limit the corresponding components in other respects (e.g., importance or order). When it is mentioned that a certain (e.g., first) component is "coupled" or "connected" to another (e.g., second) component, with or without terms "functionally" or "communicatively", it means that the certain component may be connected to the another component directly (e.g., wired), wirelessly, or through a third component. A term "module" used in various embodiments of this document may include a unit implemented in hardware, software, or firmware, and may be used interchangeable with terms such as logic, logic block, component, or circuit, for example. The module may be an integrated part, or a minimum unit of the part or a portion thereof, which performs one or more functions. For example, according to an embodiment, the module may be implemented in the form of an application-specific integrated circuit (ASIC).

Various embodiments of this document may be implemented as software (e.g., program 940) including one or more instructions stored in a storage medium (e.g., internal memory 936 or external memory 938) that may be read by a machine (e.g., electronic device 901). For example, a processor (e.g., processor 920) of the machine (e.g., electronic device 901) may call at least one instruction among the stored one or more instructions from the storage medium, and execute it. This allows the machine to be operated to perform at least one function according to the called at least one instruction. The one or more instructions may include a code generated by a compiler or a code executable by an interpreter. The machine-readable storage medium may be provided in the form of a non-transitory storage medium. Here, 'non-transitory' only means that the storage medium is a tangible device and does not include signals (e.g., electromagnetic waves), and this term does not distinguish a case where data is stored semi-permanently in the storage medium and a case where data is stored temporarily.

According to an embodiment, a method of various embodiments disclosed in this document may be included and provided in a computer program product. The computer program product may be traded between a seller and a buyer. The computer program product may be distributed in the form of a machine-readable storage medium (e.g., compact disc read only memory (CD-ROM)), or may be distributed (e.g., downloaded or uploaded) directly through an application store (e.g., Play Store") or between two user devices (e.g., smart phones), or online. In the case of online distribution, at least part of the computer program product may be at least temporarily stored, or be temporarily generated, in a machine-readable storage medium such as a memory of a manufacturer's server, an application store's server, or a relay server. According to various embodiments, each component (e.g., a module or program) among the above-described components may include a single or plurality of entities, and some of the plurality of entities may be separately arranged in other components. According to various embodiments, one or more of the components or operations described above may be omitted, or one or more other components or operations may be added. Alternatively or additionally, a plurality of components (e.g., modules or programs) may be integrated into a single component. In this case, the integrated component may perform one or more functions of each of the plurality of components identically or similarly to those performed by the corresponding component among the plurality of components prior to the integration. According to various embodiments, operations performed by modules, programs, or other components may be executed sequentially, in parallel, iteratively, or heuristically, or one or more of the operations may be executed in a different order, or be omitted, or one or more other operations may be added.

## Claims

1. A method of inputting an image into an execution screen of an application in an electronic device, the method comprising:
receiving (200) at least one user input for inputting an image into the execution screen of the application;
identifying (210) a first image input method corresponding to the at least one user input;
identifying (220) the image and an input location, on the execution screen, of the image, based on the at least one user input;
identifying (230) whether the first image input method is supported by the application;
identifying (240) a second image input method supported by the application in response to the first image input method not supported by the application;
acquiring (250) a code of a framework for inputting the image into the execution screen of the application by the second image input method, based on the image and the input location; and
displaying (260) the image on the execution screen of the application by the second image input method.

2. The method of claim 1, wherein, as the acquired code of the framework is provided to and used by the application, the image is inputted into the execution screen of the application.

3. The method of any one of claims 1 and 2, wherein identifying the second image input method supported by the application comprises identifying whether a partial area, which corresponds to the input location, within the execution screen supports the second image input method.

4. The method of any one of claims 1 to 3, wherein the second image input method is selected from among a plurality of image input methods supported by the application.

5. The method of any one of claims 1 to 4, wherein, when the first image input method is a method of inputting an image selected from a list of images displayed through a keyboard running on the application, the at least one user input comprises a user input of selecting an input field of the application.

6. The method of claim 5, wherein identifying whether the first image input method is supported by the application comprises identifying whether the first image input method is supported by the application in response to the reception of the user input of selecting the input field.

7. The method of claim 6, wherein the second image input method comprises a method of inputting an image by a drag and drop, and
identifying the second image input method supported by the application comprises identifying whether a partial area, which corresponds to the input location, within the execution screen of the application supports a function of recognizing the drag and drop.

8. The method of claim 7, wherein the second image input method supported by the application is identified by identifying whether a plurality of partial areas within the execution screen of the application support the function of recognizing the drag and drop.

9. The method of claim 6, wherein the second image input method comprises a method of inputting an image by a copy and paste.

10. The method of any one of preceding claims , wherein the first image input method comprises at least one of a method of inputting an image selected from a list of images displayed through a keyboard running on the application, a method of inputting an image by a drag and drop, or a method of inputting an image by a copy and paste, and
wherein the second image input method is an input method different from the first image input method, among the method of inputting the image selected from the list of images displayed through the keyboard running on the application, the method of inputting the image by the drag and drop, or the method of inputting the image by the copy and paste.

11. An electronic device of inputting an image into an execution screen of an application, the electronic device comprising:
a display (960);
a memory (930) configured to store instructions; and
at least one processor (920) operatively connected to the display and the memory and executing the instructions,
wherein the at least one processor (920) is configured to: by executing the instructions,
receive at least one user input for inputting the image into the execution screen of the application;
identify a first image input method corresponding to the at least one user input;
identify the image and an input location, on the execution screen, of the image, based on the at least one user input;
identify whether the first image input method is supported by the application;
identify a second image input method supported by the application in response to the first image input method not being supported by the application;
acquire a code of a framework for inputting the image into the execution screen of the application by the second image input method, based on the image and the input location; and
provide the acquired code of the framework to the application.

12. The electronic device of claim 11, wherein, as the acquired code of the framework is provided to and used by the application, the image is inputted into the execution screen of the application.

13. The electronic device of any one of claims 11 and 12, wherein the at least one processor (920) is configured to, by executing the instructions, identify whether a partial area, which corresponds to the input location, within the execution screen of the application supports the second image input method.

14. The electronic device of any one of claims 11 to 13, wherein the first image input method comprises at least one of a method of inputting an image selected from a list of images displayed through a keyboard running on the application, a method of inputting an image by a drag and drop, or a method of inputting an image by a copy and paste, wherein the second image input method is selected from among a plurality of image input methods supported by the application, and wherein the second image input method is an input method different from the first image input method, among the method of inputting the image selected from the list of images displayed through the keyboard running on the application, the method of inputting the image by the drag and drop, or the method of inputting the image by the copy and paste.

15. The electronic device of any one of claims 11 to 14, wherein, when the first image input method is the method of inputting the image selected from the list of images displayed through the keyboard running on the application, the at least one user input comprises a user input of selecting an input field of the application.

16. The electronic device of claim 15, wherein the at least one processor (920) is configured to, by executing the instructions, identify whether the first image input method is supported by the application in response to the reception of the user input of selecting the input field.

17. The electronic device of any one of claims 11 to 14, wherein the second image input method comprises the method of inputting an image by a drag and drop, and
wherein the second image input method supported by the application is identified by identifying whether a plurality of partial areas within the execution screen of the application support the function of recognizing the drag and drop.

18. A computer-readable recording medium recording a program for executing a method of inputting an image into an execution screen of an application, the method comprising:
receiving at least one user input for inputting the image into the execution screen of the application;
identifying a first image input method corresponding to the at least one user input;
identifying the image and an input location, on the execution screen, of the image, based on the at least one user input;
identifying whether the first image input method is supported by the application;
identifying a second image input method supported by the application in response to the first image input method not being supported by the application;
acquiring a code of a framework for inputting the image into the execution screen of the application by the second image input method, based on the image and the input location; and
providing the acquired code of the framework to the application.
